# EUROPEAN PATENT APPLICATION

(11) **EP 3 059 671 A1**
(43) Date of publication of application: **24.08.2016**
(21) Application number: 16156957.9
(22) Date of filing: 23.02.2016
(51) Int. Cl.: G06F 3/12, B41J 3/407

(54) **INFORMATION PROCESSING DEVICE, DISPLAY METHOD FOR INFORMATION PROCESSING DEVICE, AND PROGRAM**

(30) Priority: 23.02.2015 JP 2015033135
(71) Applicant: Seiko Epson Corporation, Tokyo 163-0811 (JP)
(72) Inventor: TSUJI, Akinori, Suwa-shi, Nagano 392-8502 (JP)
(74) Representative: MERH-IP Matias Erny Reichl Hoffmann Patentanwälte PartG mbB

(57) **Abstract**

A PC in which an information processing device according to the disclosure is applied includes: an acquisition unit (51) which acquires tape information including information that can specify a tape color of a print tape; an option display unit (52a) which displays a plurality of options to be display color candidates for the tape preview, on the basis of the tape information; a selection unit (53) which selects an arbitrary option from the plurality of options; and a preview display unit (52b) which displays the tape preview in a display color corresponding to the arbitrary option.

## Description

### CROSS-REFERENCE TO RELATED APPLICATION

The entire disclosure of Japanese Patent Application No.2015-033135, filed February 23, 2015 is expressly incorporated by reference herein.

### BACKGROUND

### 1. Technical Field

The present disclosure relates to an information processing device which displays a medium image of a print medium, a display method for an information processing device, and a program.

### 2. Related Art

Traditionally, JP-A-9-109479 is known as a technique of this type. JP-A-9-109479 discloses a technique in which the color of a print medium is discriminated on the basis of the type of a tape cartridge that is loaded, so that a tape preview is displayed in a display color corresponding to the discriminated color.

Meanwhile, a method in which print data is generated in an information processing device and then transmitted to a tape printing device so as to prepare a label is recently known. With this configuration, simplification and cost reduction of the tape printing device can be achieved and operability at the time of editing print data is improved as well. However, in the case where print data is generated in the information processing device in this way, there is the risk that even if a tape preview is displayed in a display color corresponding to the discriminated color as in JP-A-9-109479, the display color may be different from the actual label color, depending on the characteristics of the display screen installed in the information processing device.

Thus, in order to avoid such a problem, it is conceivable that a profile for changing the display color of the tape preview according to the display screen of the information processing device may be prepared and stored in the information processing device. However, a massive amount of data is expected to be generated because of the number of colors to deal with and therefore this measure is not practical. Also, while a method in which the profile corresponding to the display screen of the information processing device is acquired from a server or the like on the internet is conceivable, the way the display color looks varies depending on the user's environment of use (lighting, screen setting and the like) and therefore is hard to cope with.

### SUMMARY

An advantage of some aspects of the disclosure is to provide an information processing device capable of displaying a medium image in a display color close to the medium color of the actual print medium regardless of the characteristic of the display screen and the user's environment of use, a display method for an information processing device, and a program.

According to an aspect of the disclosure, an information processing device which displays a medium image of a print medium includes: an acquisition unit which acquires medium information including information that can specify a medium color of the print medium; an option display unit which displays a plurality of options to be display color candidates for the medium image (i. e. which displays a plurality of options as display color candidates for the medium image, each option corresponding to a respective display color candidate), on the basis of the medium information; a selection unit which selects an option (e.g. an arbitrary option) from the plurality of options (e.g. on the basis of an input by a user) ; and a preview display unit which displays the medium image in a display color corresponding to the selected option.

According to another aspect of the disclosure, a method (e.g. display method) of controlling an information processing device which displays a medium image of a print medium includes: acquiring medium information including information that can specify a medium color of the print medium; displaying a plurality of options to be display color candidates for the medium image (i.e. displaying a plurality of options as display color candidates for the medium image), on the basis of the medium information; selecting an arbitrary option from the plurality of options; and displaying the medium image in a display color corresponding to the arbitrary option.

According to these configurations, a plurality of options to be display color candidates for the medium image is displayed on the basis of the medium information acquired, and the medium image is displayed in the color selected from the options. Therefore, the medium image can be displayed in a display color which the user feels close to the actual medium color, regardless of the characteristics of the display screen and the user's environment of use. In other words, these configurations acquire and provide the user with sufficient information regarding the print medium and provide for an efficient technical framework for enabling the user to set the display color as required by characteristics of the display screen and/or the print medium. Also, since a profile or the like for changing the display color according to the characteristics of the display screen is not needed, the development of an application for using the information processing device is easy, and operation of the information processing device can be provided for in a self-contained manner, without requiring access to external sources of information.

In the information processing device, the option display unit may display a predetermined number of display color candidates depending on (i.e. in accordance with) the medium color of the print medium as the plurality of options. For example, the option display unit may display a predetermined number of display color candidates showing colors similar to the medium color of the print medium (e.g. colors that are different from the medium color with respect to their brightness, saturation, and/or hue within respective predetermined margins), as the plurality of options.

According to this configuration, since display color candidates showing colors depending on (e.g. similar to) the medium color of the print medium are displayed as the plurality of options, the selection of an option by the user can be made more easily than in the case where not only similar colors but also full-color display color candidates are displayed. Also, since a predetermined number of display color candidates are displayed, the number of options does not increase or decrease depending on the medium color, and the selection can be made easily. Thus, the present configuration simplifies selection of an option by the user, regardless of a medium color.

In the information processing device, the medium information may include information that can specify a print color of the print medium (i.e. a color in which it is to be printed on the print medium, such as an ink color, for example) . The option display unit may display a first option group that includes (e.g., is) a plurality of options to be display color candidates for the medium image (i.e. a plurality of options as display color candidates for the medium image) and a second option group that includes (e.g., is) is a plurality of options to be display color candidates for an image preview of a print image to be printed on the print medium (i.e. a plurality of options as display color candidates for an image preview of a print image to be printed on the print medium), on the basis of the medium information. The selection unit may select a first option and a second option from the first option group and the second option group, respectively. The preview display unit may display the image preview in a display color corresponding to the second option, as superimposed on the medium image in a display color corresponding to the first option. In other words, the image preview may be derived on the basis of the second option and the medium image may be derived on the basis of the first option. Both the image preview and the medium image may then be displayed, wherein the image preview is superimposed on the medium image.

According to this configuration, not only the medium image but also the image preview of the print image to be printed on the print medium can be displayed in a display color which the user feels close to the actual print color.

In the information processing device, the medium information may include information that can specify a print color of the print medium. The option display unit may display a plurality of preview samples in which an image preview of a print image to be printed on the print medium is displayed as superimposed on the medium image, as the plurality of options, each preview sample corresponding to a respective one among the plurality of options. The plurality of preview samples may differ at least in one of the display color of the medium image and the display color of the image preview.

According to this configuration, since a plurality of preview samples in which an image preview of the print image to be printed on the print medium is displayed as superimposed on the medium image is displayed as the plurality of options, the user is enabled to perform a selection operation, imagining the actual label to be prepared.

The information processing device may further include a storage unit which stores a result of selection of the option (e.g. arbitrary option) by the selection unit. The option display unit may display a plurality of options to be display color candidates for the medium image (i.e. may display a plurality of options as display color candidates for the medium image) in consideration of (e.g., in accordance with, or depending on) the result of selection (e.g. including previously selected options) stored in the storage unit.

According to this configuration, the results of selection in the past are learned and a plurality of options reflecting the result of learning is displayed. Therefore, the user's selection operation can be assisted. For example, if, from among display color candidates with five different levels of brightness, the display color candidate with the lowest level is selected previously, display color candidates around the display color candidate with the lowest level as the center value may be displayed this time, or the like. In this case, the user can quickly find out his or her preferred display color (i.e. the display color most appropriate for displaying the medium image and/or image preview) by examining the display color candidates from the center value.

In the information processing device, the preview display unit may display the medium image in a reference color corresponding to the medium color of the print medium when the medium information is acquired by the acquisition unit. The preview display unit may change the medium image to the display color corresponding to the selected option when (i.e. as soon as) this option is selected by the selection unit.

According to this configuration, the medium image is displayed in the reference color corresponding to medium color of the print medium at the point when the medium information is acquired. Therefore, the user needs to change the display color only when the user find the reference color unfitting. That is, unnecessary selection operations in the case where the reference color does not look unfitting can be omitted.

In the information processing device, the print medium may be a long print tape. The medium image may be a preview of a label formed by cutting the print tape into a strip (i.e. cutting a strip from the print medium).

According to this configuration, in the case of preparing a label, the preview in the medium color largely influences the preview of the resulting product. Therefore, displaying the medium image in a display color close to the actual medium color enables preparation of a label desired by the user.

According to still another aspect of the disclosure, a program causes a computer to execute each process in the display method for the information processing device.

Using this program, a control method (e.g., display method) for an information processing device capable of displaying a medium image in a display color close to the medium color of the actual print medium regardless of the characteristics of the display screen and the user's environment of use can be achieved.

### BRIEF DESCRIPTION OF THE DRAWINGS

Examples of embodiments of the disclosure will be described with reference to the accompanying drawings, wherein like numbers reference like elements.
FIG. 1 shows the configuration of an example of a print system according to an embodiment of the disclosure.
FIG. 2 is a block diagram exemplarily showing the hardware configuration of a PC.
FIG. 3 is a block diagram exemplarily showing the hardware configuration of a tape printing device.
FIG. 4 is a block diagram exemplarily showing the functional configuration of the PC.
FIG. 5 shows an example of an editing screen.
FIG. 6 shows an example of an editing screen and a label preview selection screen.
FIG. 7 is a flowchart showing an example of the flow of print data generation processing by the PC.
FIG. 8 shows an example of an editing screen and a label preview selection screen according to Modification 1.

### DESCRIPTION OF EXEMPLARY EMBODIMENTS

Hereinafter, the information processing device, the control method (e.g., display method) for the information processing device and the program according to an embodiment of the disclosure will be described, referring to the accompanying drawings. In this embodiment, the case where the information processing of the disclosure is applied to a personal computer (hereinafter referred to as "PC") 2 will be described as an example. The PC 2 can communicate with a tape printing device 3 (exemplarily embodying a printing device capable of printing on a print medium) which prints on a long print medium (hereinafter referred to as "print tape T") and thus prepares a label. The tape is an example of a print medium.

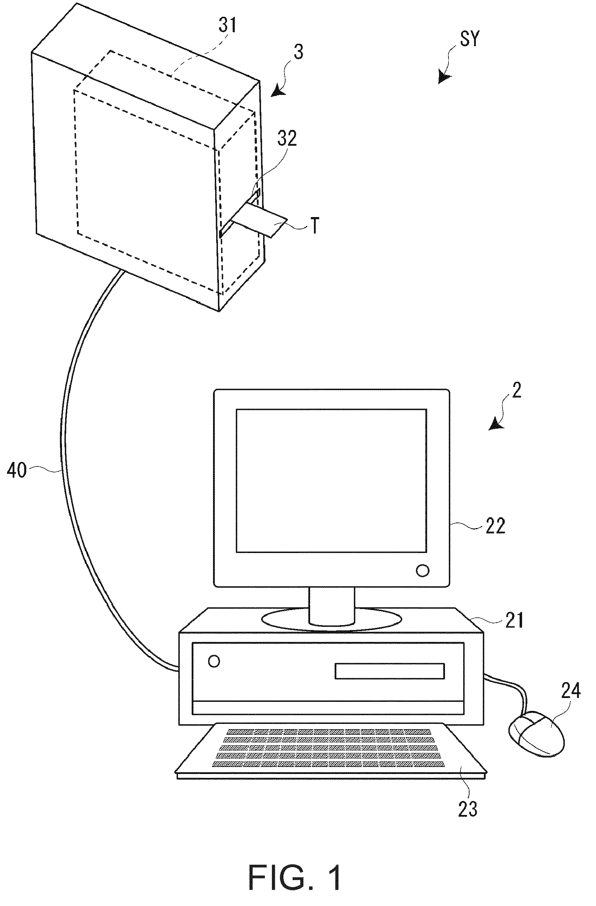

FIG. 1 shows the configuration of an example of a print system SY according to an embodiment of the disclosure. As shown in FIG. 1, the print system SY includes the PC 2 and the tape printing device 3.

The PC 2 has a typical computer configuration including a PC main body 21, a display screen 22, a keyboard 23, a mouse 24 and the like. The PC 2 is connected to the tape printing device 3 so as to enable communication. For example, the PC 2 may communicate with the tape printing device 3 via a USB cable 40. The communication between the PC 2 and the tape printing device 3 is not limited to the USB standards and may use other standards such as Ethernet (trademark registered), for example. Wireless communication standards such as Bluetooth (trademark registered) may also be used.

When a tape cartridge 31 accommodating the long print tape T and an ink ribbon is loaded in the tape printing device 3 and print data is received from the PC 2, the tape printing device 3 performs print processing and cutting processing while reeling off the print tape T from the tape cartridge 31. After the cutting processing, the printed part of the print tape T may be discharged from a tape discharge port 32 and used as a label.

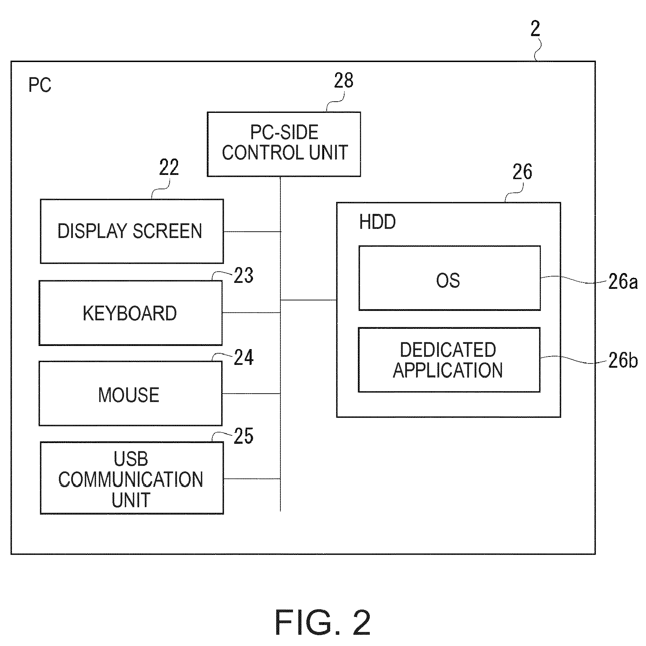

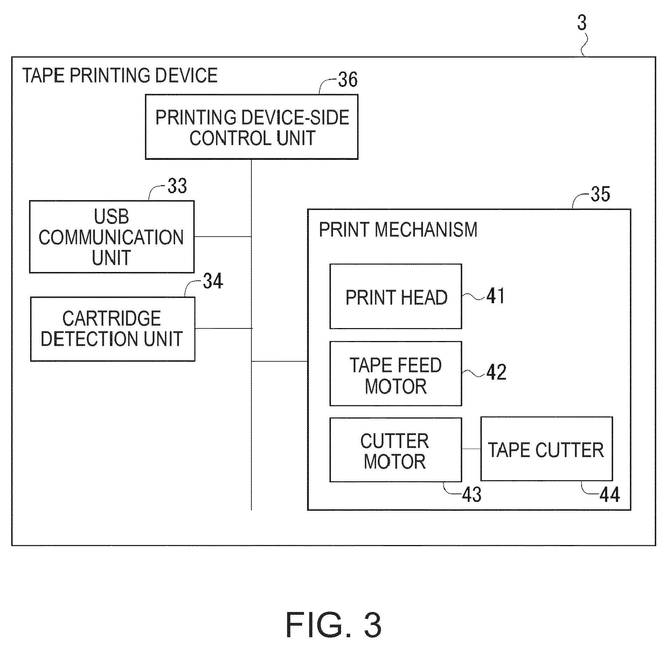

Next, an example of the hardware configurations of the PC 2 and the tape printing device 3 will be described, referring to FIGS. 2 and 3. FIG. 2 is an exemplary block diagram of the PC 2. The PC 2 may include, as its hardware configuration, a USB communication unit 25, an HDD (hard disk drive) 26 and a PC-side control unit 28 in addition to the display screen 22, the keyboard 23 and the mouse 24 shown in FIG. 1.

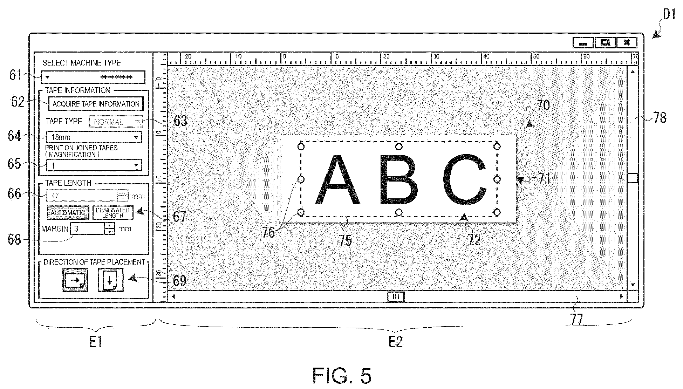

The display screen 22 displays various kinds of information such as an editing screen D1 for label editing (see FIG. 5 and the like). The keyboard 23 and the mouse 24 are used to perform selection operations on various options and editing operations. The USB communication unit 25 communicates with the tape printing device 3 on the basis of the USB communication standards.

The HDD 26 stores an OS (operating system) 26a and a dedicated application 26b. The dedicated application 26b is an application to generate print data to be outputted to the tape printing device 3. The editing screen D1 is a screen displayed as a function of the dedicated application 26b.

The PC-side control unit 28 is materialized by a CPU (central processing unit) and a RAM (random access memory) or the like, and performs print data generation processing and communication control with the tape printing device 3 in collaboration with each of the above component units (reference numbers 22 to 26).

FIG. 3 is an exemplary block diagram of the tape printing device 3. The tape printing device 3 may include a USB communication unit 33, a cartridge detection unit 34, a print mechanism 35 and a printing device-side control unit 36, as its hardware configuration.

The USB communication unit 33 communicates with the PC 2 via USB communications. The cartridge detection unit 34 detects tape information (exemplarily embodying medium information) about the print tape T accommodated in the tape cartridge 31. In this embodiment, the tape color (exemplarily embodying medium color) of the print tape T, the ink color (exemplarily embodying print color) to be printed on the print tape T, and the tape type (exemplarily embodying medium material, or in general material, e.g. whether it is a cut label that is cut into a circle, ellipse or wounded corners in advance, and the like) are detected as the tape information. As the detection method, reading a code image (e.g. barcode, two-dimensional code or the like) or RFID (radio frequency identification) attached or printed on the tape cartridge 31, or detecting one or more holes formed in the tape cartridge 31, or the like is conceivable. Also, the print tape T reeled off from the tape cartridge 31 may be detected with various sensors (e.g. optical sensors), instead of detecting the tape cartridge 31.

The print mechanism 35 may include a print head 41, a tape feed motor 42, a cutter motor 43 and a tape cutter 44. The print head 41 is a thermal head and performs printing, with the print tape T and the ink ribbon that are reeled off being sandwiched between the print head 41 and a platen roller (not illustrated). The tape feed motor 42 carries the print tape T that is reeled off, from the print head 41 toward the tape discharge port 32 (see FIG. 1). The cutter motor 43 drives the tape cutter 44 to cut the printed part of the print tape T in the direction of tape width in the state where the tape feeding is temporarily stopped.

The printing device-side control unit 36 is materialized by a CPU, a RAM and the like and performs communication control and print control with the PC 2 in collaboration with each of the above component units (reference numbers 33 to 35). Specifically, when the tape cartridge 31 is loaded or when an inquiry is received from the PC 2, the printing device-side control unit 36 sends the tape information detected by the cartridge detection unit 34 to the PC 2 via the USB communication unit 33. Also, the printing device-side control unit 36 receives print data from the PC 2 via the USB communication unit 33 and controls the print mechanism 35 on the basis of the print data.

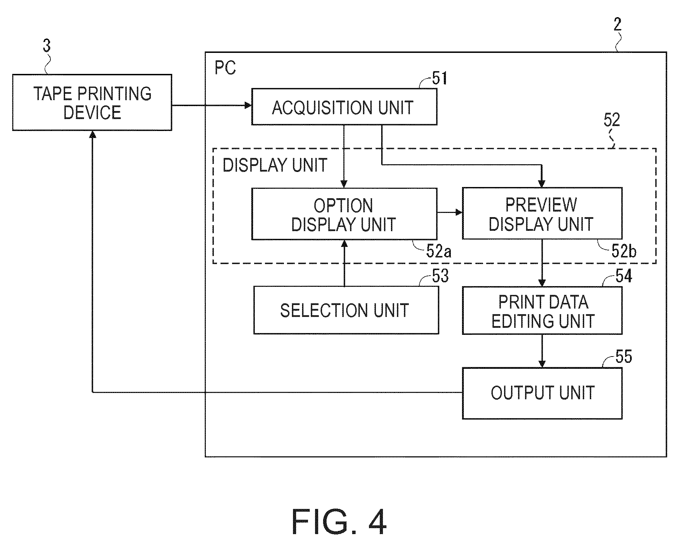

Next, an example of the functional configuration of the PC 2 will be described, referring to FIG. 4. The PC 2 may have an acquisition unit 51, a display unit 52, a selection unit 53, a print data editing unit 54 and an output unit 55, as its functional configuration. These units maybe functions provided mainly by the dedicated application 26b (see FIG. 2) .

The acquisition unit 51 acquires tape information (exemplarily embodying medium information) detected by the cartridge detection unit 34 of the tape printing device 3. The tape information includes information indicating the tape color (exemplarily embodying the medium color) of the print tape T and information indicating the ink color (exemplarily embodying the print color) of the ink ribbon. Also, the identification information of the tape cartridge 31 may be acquired and the tape color of the print tape T and the ink color of the ink ribbon may be specified as the tape information from the identification information, referring to a correspondence table incorporated in the dedicated application 26b.

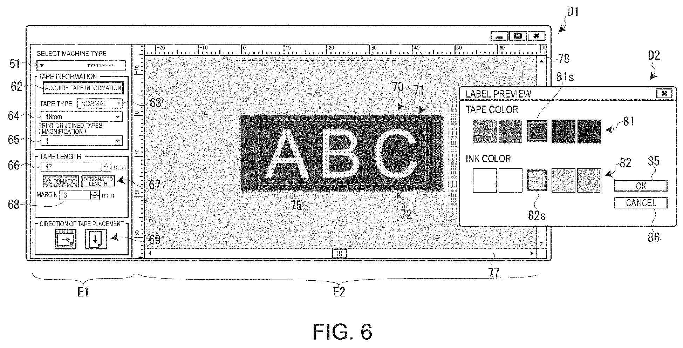

The display unit 52 may include an option display unit 52a and a preview display unit 52b. The preview display unit 52b displays a layout of a label in an editing screen D1 (layout editing area E2, described later). Specifically, an image preview 72 imitating a print image is displayed as superimposed on a tape preview 71 (exemplarily embodying a medium image, or medium preview) imitating the print tape T (see FIG. 5 and the like). Hereinafter, the tape preview 71 and the image preview 72 are collectively referred to as a "label preview 70". Meanwhile, the option display unit 52a displays a label preview selection screen D2 (see FIG. 6) on the basis of the tape information acquired by the acquisition unit 51. The label preview selection screen D2 includes a first option group (reference number 81) which provides display color candidates for the tape preview 71 to be displayed, and a second option group (reference number 82) which provides display color candidates for the image preview 72.

The selection unit 53 selects a first option (arbitrary option) and a second option from the first option group (reference number 81) and the second option group (reference number 82), respectively, e.g. on the basis of the operation on the keyboard 23 or the mouse 24 by the user. These selections are operations carried out to correct the display colors when the user feels that the tape color and the print color of the actual label are different from the display color of the tape preview 71 and the display color of the image preview 72 that are displayed as previews. The preview display unit 52b displays the tape preview 71 in the display color corresponding to the first option and displays the image preview 72 in the color corresponding to the second option, according to the selections by the selection unit 53.

The print data editing unit 54 edits the tape preview 71 and the image preview 72 displayed by the preview display unit 52b, e.g. on the basis of the operation on the keyboard 23 or the mouse 24 by the user. The content of editing includes change in the tape length, input of a text, insertion of a graphic pattern, change in the font, size and decoration of the text, change in the type of line of the graphic pattern and painting out on the surface, or the like. The output unit 55 outputs print data reflecting the results of editing by the print data editing unit 54, to the tape printing device 3.

Next, the editing screen D1 and the label preview selection screen D2 will be described using a specific example with reference to FIGS. 5 and 6. FIG. 5 shows an example of display of the editing screen D1 before tape information is acquired. As shown in the example of FIG. 5, the editing screen D1 includes a tape setting area E1 in the left part of the screen and a layout editing area E2 in the right part of the screen.

The tape setting area E1 includes an area 61 for selecting a machine type, a tape information acquisition button 62 used to acquire tape information, an area 63 for selecting a tape type, an area 64 for selecting a tape width, an area 65 for selecting a magnification in the case of printing on joined tapes, an area 66 for displaying and designating a tape length, an area 67 for changing the tape length setting, an area 68 for designating a margin length, and an area 69 for selecting a direction of placing the print tape T.

In the area 61, the machine type of the tape printing device 3 that is connected is selected. The tape information acquisition button 62, when pressed, acquires tape information about the print tape T (tape cartridge 31) loaded in the tape printing device 3, i.e. the acquisition unit 51 is caused to acquire the tape information. In the area 63, "cut label" is selected when a cut label is used, and "normal" is selected if otherwise. In the area 64, the tape width of the print tape T loaded in the tape printing device 3 is selected. The information about the tape width may be acquired as a part of the tape information and may be reflected in the area 64. In the area 65, the number of tapes joined (magnification) in the case of using a plurality of print tapes T joined together in the direction of tape width is selected.

In the area 67, either "automatic" for automatically adjusting the length of the print tape T according to the length of the print image in the direction of tape length or "designated length" for preparing a length with a length designated in the area 66 is selected. In the area 66, an automatically adjusted tape length is displayed if "automatic" is selected in the area 67, whereas a tape length is designated if "designated length" is selected in the area 67. In the area 68, forward and back margins of the label are designated in the form of numeric values. In the area 69, either "right arrow" for displaying the label preview 70 horizontally placed with the text horizontally written or "down arrow" for displaying the label preview 70 vertically placed with the text vertically written is selected.

Meanwhile, in the layout editing area E2, the label preview 70 in which the image preview 72 showing the print image (in the example of FIG. 5, the text "ABC") is superimposed on the tape preview 71 showing the print tape T (in the example of FIG. 5, the white rectangle) is displayed. Also, a dashed-line frame 75 indicating the print range and a plurality of handles 76 (in the example of FIG. 5, eight handles) for changing the position and size of the inputted text (text block) may be displayed as superimposed on the label preview 70. The handles 76 become hidden when the position and size of the text are finalized. Also, scroll bars 77, 78 may be provided in a bottom part and a right-side part of the layout editing area E2.

If the tape information acquisition button 62 is clicked on in the editing screen D1 shown in FIG. 5, the label preview selection screen D2 is displayed as a pop-up screen, as shown in the example of FIG. 6. Also, the label preview 70 (in the layout editing area E2) is displayed in the reference color corresponding to the acquired tape information, i.e. the tape preview and the image preview are displayed in respective reference colors corresponding to the acquired tape information. For example, if the tape information includes information indicating "tape color: red" and "ink color: white", the tape preview 71 is displayed in the reference color of "red" and the image preview 72 is displayed in the reference color of "white". At this point, the color of the dashed-line frame 75 and/or the handles 76 may be changed with the change in the display color of the tape preview 71. A correspondence table in which the correspondence between tape information and the reference color is defined and a correspondence table for selecting a similar color (described later) corresponding to the reference color may be provided by the dedicated application 26b.

On the label preview selection screen D2, a color chip group 81 (exemplarily embodying a first option group) made up of a plurality of color chips for selecting a tape color and a color chip group 82 (exemplarily embodying a second option group) made up of a plurality of color chips for selecting an ink color are displayed. For example, if the tape information includes information indicating "tape color: red", color chips showing colors similar to four types of "red" around the reference color of "red" are displayed as well as a color chip of the reference color of "red", in the color chip group 81. Here, the "similar color" refers to a color of the same kind as the reference color, having different brightness, density (saturation) and color mixture (RGB proportion, or hue) and the like from the reference color, e.g. whose brightness, density and/or color mixture (RGB values, hue) are different from the reference color within respective predetermined margins, or whose brightness, density and/or color mixture are respectively defined with reference to the brightness, density and/or color mixture of the reference color. In the illustrated example, as the color chip group 81, five types of color chips showing a "color with brightness two levels above the reference color", "color with brightness one level above the reference color", "reference color", "color with brightness one level below the reference color", and "color with brightness two levels below the reference color" are arranged in order of brightness. Of the five types of color chips, the color chip with a black bold frame 81s indicates that this option is selected.

Similarly, if, for example, the tape information includes information indicating "ink color: white", color chips showing colors similar to four types of "white" around the reference color of "white" are displayed as well as a color chip of the reference color of "white", in the color chip group 82 for selecting an ink color. As the color chip group 82, similarly, five types of color chips showing a "color with brightness two levels above the reference color", "color with brightness one level above the reference color", "reference color", "color with brightness one level below the reference color", and "color with brightness two levels below the reference color" are arranged in order of brightness. Of the five types of color chips, the color chip with a black bold frame 82s indicates that this option is selected.

If an "OK" button 85 is pressed on the label preview selection screen D2, the display color of the tape preview 71 and/or the image preview 72 is changed on the basis of the option (s) selected, and then the label preview selection screen D2 becomes hidden. If a "cancel" button 86 is pressed, the label preview selection screen D2 becomes hidden without changing the display color of the tape preview 71 and/or the image preview 72. Although not particularly illustrated, the numbers of color chips displayed in the color chip groups 81, 82 (number of a plurality of options) are the same (i.e. are a predetermined number) regardless of the tape color and the ink color specified by the tape information.

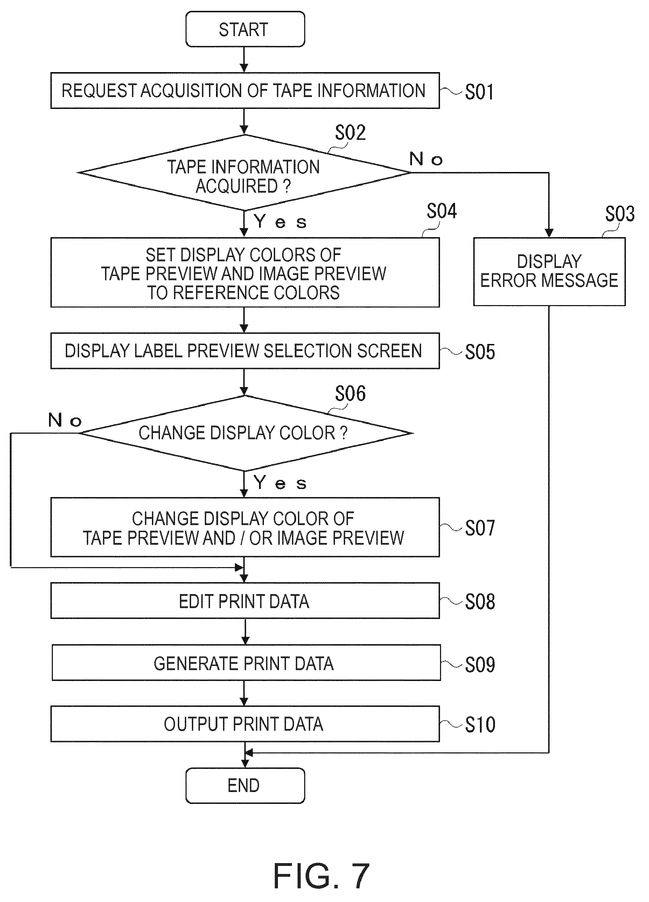

Next, an example of the flow of print data generation processing by the PC 2 will be described, referring to the flowchart of FIG. 7. Here, it is assumed that the dedicated application 26b is already started up and that the editing screen D1 (see the example of FIG. 5) is displayed on the display screen 22 of the PC 2.

If the tape information acquisition button 62 is pressed on the editing screen D1 by the user or if tape information acquisition is initiated otherwise, the PC 2 (e.g. dedicated application 26b) sends a tape information acquisition request to the tape printing device 3 (S01) and determines whether tape information is acquired from the tape printing device 3 or not (S02). If tape information is not successfully acquired (for example, if the tape cartridge 31 is not loaded in the tape printing device 3, or the like) (S02: No), the PC 2 displays an error message on the editing screen D1 (S03) and ends the print data generation processing.

Meanwhile, if tape information is acquired (S02: Yes), the PC 2 sets the display colors of the tape preview 71 and the image preview 72 displayed on the editing screen D1 to the reference colors corresponding to the tape color and the ink color included in the tape information (S04) and also displays the label preview selection screen D2 (S05). If the display color (display color corresponding to the tape color or the ink color) is changed on the label preview selection screen D2 (S06: Yes), the PC 2 changes the display color of the tape preview 71 and/or the image preview 72 according to this change (S07). If no change is made to the display colors (S06: No), the PC 2 omits S07.

Subsequently, the PC 2 edits print data on the basis of an editing operation by the user (S08) and generates print data on the basis of a print instruction operation by the user (S09). Then, the PC 2 outputs the generated print data to the tape printing device 3 (S10) and ends the print data generation processing.

As described above, the PC 2 in this embodiment displays a plurality of options to be (e.g., as) display color candidates for the tape preview 71 on the label preview selection screen D2 on the basis of the tape information acquired from the tape printing device 3 (e.g. on the basis of the tape color included in the tape information), and displays the tape preview 71 in a display color selected from the options. Thus, the tape preview 71 can be displayed in a display color which the user feels close to the actual tape color, regardless of the characteristic of the display screen 22 and the user's environment of use (lighting, screen setting and the like). Particularly in the case of preparing a label, the preview in the tape color largely influences the preview of the resulting product. Therefore, by having the tape preview 71 displayed in a display color close to the actual tape color, the user can edit the print data while checking the display and can prepare a label as desired. Also, since a profile or the like for changing the display color according to the characteristics of the display screen 22 is not needed, the development of the dedicated application 26b is easy. Thus, the present disclosure may be said to enable gathering, processing and suitably displaying of (color) information that efficiently allows a user to select appropriate display colors, depending on specific hardware requirements and/or environmental circumstances.

Since display color candidates showing colors similar to the tape color are displayed as the plurality of options, the user can select an option more easily than in the case where not only the similar colors but full-color display color candidates are displayed. Also, since a predetermined number of display color candidates (in the exemplary embodiment, five types) are displayed, the number of options does not increase or decrease depending on the tape color and the selection can be made easily.

On the label preview selection screen D2, not only the display color candidates for the tape preview 71 but also the display color candidates for the image preview 72 are displayed. Therefore, the image preview 72 can be similarly displayed in a color which the user feels close to the actual ink color. Since the editing screen D1 displays the tape preview 71 and the image preview 72 in the reference colors corresponding to the tape color and the ink color when tape information is acquired, the user needs to change the display colors on the label preview selection screen D2 only when the user finds the reference colors unfitting, and unnecessary selection operations in the case where the reference colors do not look unfitting can be omitted.

The above embodiment is not limiting and the following modifications can be employed.

### Modification 1

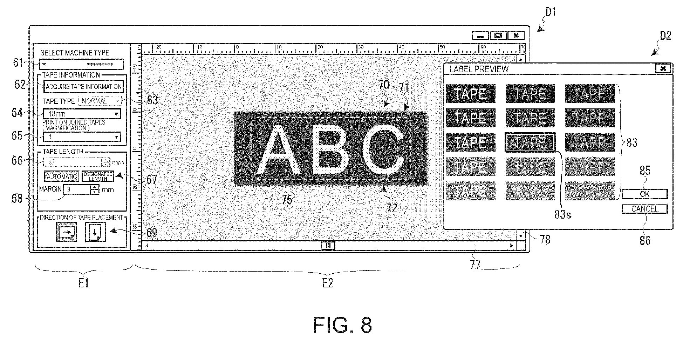

In the embodiment, the color chip groups 81, 82 (see FIG. 6) are displayed on the label preview selection screen D2 (more generally, by the display unit 52), as display color candidates for the tape preview 71 and the image preview 72. However, a preview sample group 83 made up of a plurality of preview samples in which an image preview (for example, a prescribed text "TAPE") is displayed as superimposed on a tape preview may be displayed, as shown in FIG. 8. In this modification, a reference color sample (FIG. 8, center) corresponding to the reference colors of the tape color and the print color, and a plurality of similar color samples which are based on the reference color sample and in which at least one of the display color of the tape preview and the display color of the image preview is different (i. e. which are pairwise different from each other in at least one of the display color of the tape preview and the display color of the image preview), are displayed (in the illustrated example, a total of 15 types), as the preview sample group 83. Here, "similar color samples" means that the display color of the tape preview and the display color of the image preview of each similar color sample is similar to, respectively, the display color of the tape preview and the display color of the image preview of the reference color sample within the meaning of the term "similar color" defined above. The preview sample with a black bold frame 83s indicates that this option is selected. Thus, according to this modification, since the preview sample group 83 is displayed as display color candidates, the user can select a desired display color while imagining the actual label to be prepared. Also, since the display color of the tape preview 71 and the display color of the image preview 72 can be selected in one shot, the selection operation is easy.

The functions of the "OK" button 85 and the "cancel" button 86 are similar to those on the label preview selection screen D2 shown in the example of FIG. 6. The character string displayed in the preview sample may be a text edited in the layout editing area E2 (in the illustrated example, "ABC"), instead of the prescribed text.

### Modification 2

The result of selection by the user on the label preview selection screen D2 may be learned and reflected on the selection of a display color candidate. In this case, the PC 2 has a storage unit (not illustrated) which stores the result of selection of a display color candidate by the selection unit 53 (result of selection of an option, e.g. arbitrary option), and the option display unit 52a displays display color candidates (color chip groups 81, 82) for the tape preview 71 and the image preview 72 or the preview sample group 83 in consideration of the result of selection in the past stored in the storage unit (i.e. in consideration of previously selected options). This configuration can assist the user's selection operation. For example, if, from among display color candidates with five different levels of color tones (for example, candidates with brightness levels "+2", "+1", "0", "-1", and "-2"), the display color candidate with the lowest level is selected previously, display color candidates around the display color candidate with the lowest level as the reference color (for example, candidates with brightness levels "0", "-1", "-2", "-3", and "-4") may be displayed this time, or the like. Also, the average value or center value of the brightness levels may be calculated on the basis of the result of learning in the past and a reference color may be selected on the basis of the result of the calculation. In such cases, the user can quickly find out his or her preferred display color by examining the display color candidates from the reference color. The storage unit may be either a volatile storage medium or a non-volatile storage medium.

### Other Modifications

While the color chip groups 81, 82 or the preview sample group 83 is displayed as display color candidates which are a reference color corresponding to the tape color/ink color and colors similar to the reference color in the embodiment, the reference color may not be included. That is, the display color candidates other than the display color of the label preview 70 displayed in the layout editing area E2 may be displayed as the color chip groups 81, 82 or the preview sample group 83.

As display color candidates, colors other than similar colors may be displayed. That is, different colors from the actual tape color/ink color may be used as the display color of the label preview 70 according to the user's preference. Also, under special lighting, the display color on the display screen 22 may differ from the color recognized by the user. In such circumstances, by deliberately presenting colors other than similar colors as the color chip groups 81, 82 or the preview sample group 83 (e.g. in dependence on the lighting condition), the display color of the label preview 70 recognized by the user can be made closer to the actual tape color.

Instead of the color chip groups 81, 82 shown in FIG. 6, options indicating color codes or color descriptions (for example, "brightness +2", "brightness -1" and the like in the case where the reference color is "brightness 0") may be displayed.

In the embodiment, the display color of the label preview 70 is changed at the point when the "OK" button 85 is pressed on the label preview selection screen D2. However, the display color of the label preview 70 may be changed at the point when the selected option in the color chip groups 81, 82 or the preview sample group 83 is changed (when black bold frames 81s, 82s, 83s are moved).

In the embodiment, one option is selected from the plurality of options displayed on the label preview selection screen D2. However, it may be possible to select a plurality of options. For example, if the options provided do not include a desired color, the user may select two or three colors close to the desired color and then select a mixture of these colors as the display color.

While the print tape T is used as an example of the print medium in the embodiment, the embodiment is also applicable to the case where print media such as copy papers or postcards are used. Also, while the PC 2 is used as an example of the information processing device, the embodiment is also applicable to various tablet terminals such as smartphone or other information processing devices. If the backlight adjusting function for the display screen is installed as in tablet terminals, display color candidates displayed on the label preview selection screen D2 may be varied according to the setting of the backlight. In general, display color candidates displayed on the display unit 52 may be varied according to a brightness setting of display unit 52. Alternatively, a recommendation to the user (displaying a recommended option in a different display form from the other options) may be made in consideration of the setting of the backlight (in general, the brightness setting of the display unit 52).

In the embodiment, the tape printing device 3 sends back tape information in response to the tape information acquisition request by the PC 2. However, the tape printing device 3 may voluntarily send tape information. Also, the user may input the tape color and the ink color to the PC 2, instead of detecting tape information in the tape printing device 3. In this case, the user may input roughly categorized colors such as "red" and "white", and colors similar to each of these colors may be displayed as display color candidates.

Each component in the print system SY (PC 2 and tape printing device 3) described in the embodiment and modifications may be provided as a program. Also, the program may be provided in the form of being stored in various recording media (CD-ROM, flash memory and the like). That is, a program which causes a computer to function as each component of the print system SY and a recording medium having the program recorded therein are included in the scope of right of the disclosure. Also, various changes can be made according to need without departing from the scope of the disclosure, such as implementing each part of the PC 2 in the embodiment via cloud computing.

## Claims

1. An information processing device for displaying a medium image of a print medium, the device comprising:
an acquisition unit (51) which is configured to acquire medium information including information that can specify a medium color of the print medium;
an option display unit (52a) which is configured to display a plurality of options to be display color candidates for the medium image, on the basis of the medium information;
a selection unit (53) which is configured to select an option from the plurality of options; and
a preview display unit (52b) which is configured to display the medium image in a display color corresponding to the selected option.

2. The information processing device according to claim 1, wherein the option display unit (52a) is configured to display a predetermined number of display color candidates showing colors similar to the medium color of the print medium, as the plurality of options.

3. The information processing device according to claim 1 or 2, wherein the medium information includes information that can specify a print color of the print medium,
the option display unit (52a) is configured to display a first option group that includes a plurality of options to be display color candidates for the medium image and a second option group that includes a plurality of options to be display color candidates for an image preview of a print image to be printed on the print medium, on the basis of the medium information,
the selection unit (53) is configured to select a first option and a second option from the first option group and the second option group, respectively, and
the preview display unit (52b) is configured to display the image preview in a display color corresponding to the second option, as superimposed on the medium image in a display color corresponding to the first option.

4. The information processing device according to any one of claims 1 to 3, wherein the medium information includes information that can specify a print color of the print medium,
the option display unit (52a) is configured to display a plurality of preview samples in which an image preview of a print image to be printed on the print medium is displayed as superimposed on the medium image, as the plurality of options, and
the plurality of preview samples differ from one another at least in one of the display color of the medium image and the display color of the image preview.

5. The information processing device according to any one of claims 1 to 4, further comprising a storage unit which is configured to store a result of selection from among the plurality of options by the selection unit (53),
wherein the option display unit (52a) is configured to display a plurality of options to be display color candidates for the medium image in accordance with the result of selection stored in the storage unit.

6. The information processing device according to any one of claims 1 to 5, wherein
the preview display unit (52b) is configured to display the medium image in a reference color corresponding to the medium color of the print medium when the medium information is acquired by the acquisition unit (51), and
change the medium image to the display color corresponding to the selected option when the respective option is selected by the selection unit (53).

7. The information processing device according to any one of claims 1 to 6, wherein the print medium is a long print tape, and
the medium image is a preview of a label formed by cutting the print tape into a strip.

8. A method of controlling an information processing device for displaying a medium image of a print medium, the method comprising:
acquiring medium information including information that can specify a medium color of the print medium;
displaying a plurality of options to be display color candidates for the medium image, on the basis of the medium information;
selecting an option from the plurality of options; and
displaying the medium image in a display color corresponding to the selected option.

9. The method according to claim 8, further comprising displaying a predetermined number of display color candidates showing colors similar to the medium color of the print medium, as the plurality of options.

10. The method according to claim 8 or 9, wherein the medium information includes information that can specify a print color of the print medium, and
the method further comprises:
displaying a first option group that includes a plurality of options to be display color candidates for the medium image and a second option group that includes a plurality of options to be display color candidates for an image preview of a print image to be printed on the print medium, on the basis of the medium information,
selecting a first option and a second option from the first option group and the second option group, respectively, and
displaying the image preview in a display color corresponding to the second option, as superimposed on the medium image in a display color corresponding to the first option.

11. The method according to any one of claims 8 to 10, wherein the medium information includes information that can specify a print color of the print medium,
the method further comprises displaying a plurality of preview samples in which an image preview of a print image to be printed on the print medium is displayed as superimposed on the medium image, as the plurality of options, and
the plurality of preview samples differ from one another at least in one of the display color of the medium image and the display color of the image preview.

12. The method according to any one of claims 8 to 11, further comprising:
storing a result of selection from among the plurality of options, and
displaying a plurality of options to be display color candidates for the medium image in accordance with the result of selection stored in the storage unit.

13. The method according to any one of claims 8 to 12, further comprising:
displaying the medium image in a reference color corresponding to the medium color of the print medium when the medium information is acquired, and
changing the medium image to the display color corresponding to the selected option when the respective option is selected from among the plurality of options.

14. The method according to any one of claims 8 to 13, wherein the print medium is a long print tape, and
the medium image is a preview of a label formed by cutting the print tape into a strip.

15. A program for causing a computer to execute each process in the display method for the information processing device according to any one of claims 8 to 14.
